# EUROPÄISCHE PATENTSCHRIFT

(11) **EP 3 778 303 B1**
(45) Veröffentlichungstag und Bekanntmachung des Hinweises auf die Patenterteilung: **17.01.2024**
(21) Anmeldenummer: 20188199.2
(22) Anmeldetag: 28.07.2020
(51) Int. Cl.: B60P 7/14

(54) **LADUNGSAUFNAHMEEINRICHTUNG MIT EINER LADUNGSSICHERUNGSEINRICHTUNG**
LOAD RECEIVING DEVICE WITH LOAD SECURING DEVICE
DISPOSITIF DE RECEPTION DE CHARGEMENT DOTÉ D'UN DISPOSITIF DE SÉCURISATION DU CHARGEMENT

(30) Priorität: 16.08.2019 DE 102019122102
(43) Veröffentlichungstag der Anmeldung: 17.02.2021
(73) Patentinhaber: STILL GmbH, 22113 Hamburg (DE)
(72) Erfinder: IGNATOV, Maria, 20253 Hamburg (DE); HÜBNER, Rainer, 22085 Hamburg (DE); JÜTTNER, Sascha, 21244 Buchholz (DE)
(74) Vertreter: Patentship Patentanwaltgesellschaft

(56) Entgegenhaltungen:
- GB-A- 2 498 420
- US-A- 5 468 038
- US-A1- 2010 306 919
- US-A1- 2017 361 757
- US-B1- 8 690 219

## Beschreibung

Die Erfindung betrifft eine Ladungsaufnahmeeinrichtung für ein Fahrzeug zur Aufnahme einer Ladung, wobei die Ladungsaufnahmeeinrichtung über eine Ladungssicherungseinrichtung zur Sicherung der Ladung im Bereich der Ladungsaufnahmeeinrichtung verfügt, wobei die Ladungssicherungseinrichtung an mindestens einer Umfangsseite der Ladungsaufnahmeeinrichtung mindestens einen, zwischen einer entlang der Umfangsseite liegenden und einer aufrechten Position schwenkbaren, Schwenkarm aufweist.

Aus der US 2017/361757 A1 ist eine gattungsgemäße Ladungsaufnahmeeinrichtung mit den Merkmalen des Oberbegriffs des Patentanspruchs 1 bekannt. Die US 2017/361757 A1 offenbart eine als Heckklappe eines Pickup-Fahrzeugs ausgebildete Ladungsaufnahmeeinrichtung, wobei in der heruntergeklappten Stellung der Heckklappe eine Ladungssicherungseinrichtung vorgesehen ist. Die Ladungssicherungseinrichtung besteht aus als Säulenelementen ausgebildeten Schwenkarmen, die in der Heckklappe zwischen einer liegenden Stellung und einer aufrechten Stellung klappbar angeordnet sind. Die Säulenelemente können Löcher oder Vorsprünge aufweisen, um Bänder, Schnüre oder Netze anzubringen. Hierbei werden in einem ersten Schritt die Säulenelementen hochgeklappt und anschließend kann in einem zweiten Schritt ein Netz entlang der hochgeklappten Säulenelementen aufgespannt werden.

Die US 5 468 038 A offenbart eine verlängerbare Heckklappe eines Pickup-Fahrzeugs, bei dem in der heruntergeklappten Stellung der Heckklappe eine Ladungssicherungseinrichtung vorgesehen ist. Die Ladungssicherungseinrichtung umfasst hochklappbare Säulen, an denen Brüstungselemente schwenkbar angeordnet sind. Bei heruntergeklappter Heckklappe müssen zuerst die Säulen hochgeklappt werden und anschließend zwei an der Säule schwenkbar angeordnete Brüstungselemente ausgeklappt werden, um Seitenbrüstungen an der Heckklappe zu bilden.

Unter Ladungsaufnahmeeinrichtungen sind allgemein Einrichtungen, insbesondere Plattformen, Ablageflächen, Gitterboxen, Paletten etc., zu verstehen, die eine Ladung aufnehmen können. Häufig sind solche Ladungsaufnahmeeinrichtungen auf Fahrzeugen untergebracht, mit denen die Ladung transportiert werden kann.

Beim Transport einer Ladung mittels eines Fahrzeugs muss die Ladung gesichert werden, um insbesondere ein Verrutschen der Ladung zu verhindern. Hierfür kommen beispielsweise beim Transport von Ladungen in Lastkraftwagen oder Zügen Aufsetzrahmen aus Holz, Kunststoff oder Metall zum Einsatz, mit denen die Ladung fixiert werden kann. Weit verbreitet ist ebenso eine Ladungssicherung mittels Gummibänder und Spanngurten.

Auch beim Transport von Ladungen mittels Flurförderzeugen muss auf eine korrekte Ladungssicherung geachtet werden. Beispielsweise werden zum Kommissionieren von Waren Kommissionierfahrzeuge eingesetzt, die über eine Ladungsaufnahmeeinrichtung verfügen, welche insbesondere als Plattform ausgebildet ist. Auf der Plattform des Kommissionierfahrzeugs können eine oder mehrere Paletten aufgenommen werden. Beim Kommissionieren werden die Waren direkt auf die Ladungsaufnahmeeinrichtung oder auf eine auf die Ladungsaufnahmeeinrichtung abgelegte Palette abgelegt. Üblicherweise werden die Waren in Paketen auf der Ladungsaufnahmeeinrichtung oder der auf der Ladungsaufnahmeeinrichtung abgelegten Palette gestapelt. Um ein Verrutschen oder Herabfallen der Pakete von der Plattform des Kommissionierfahrzeugs bzw. von der auf der Plattform befindlichen Palette zu verhindern, werden die Pakete üblicherweise von einem Mitarbeiter nach dem Beladen des Fahrzeugs manuell mit einer Dehnfolie, einer sogenannten Stretchfolie, umwickelt und so gesichert.

Die bekannten Methoden der Ladungssicherung sind mit einem hohen Arbeits- und Zeitaufwand verbunden. Da hierfür Personaleinsatz erforderlich ist, sind diese Methoden außerdem nicht für autonome Fahrzeuge geeignet, die ohne Personal betrieben werden.

Der vorliegenden Erfindung liegt die Aufgabe zugrunde, eine Ladungsaufnahmeeinrichtung mit einer Ladungssicherungseinrichtung zur Verfügung zu stellen, bei der eine Ladungssicherung hinsichtlich der genannten Nachteile verbessert ist.

Diese Aufgabe wird erfindungsgemäß dadurch gelöst, dass an dem Schwenkarm eine Spanneinrichtung derart angebracht ist, dass durch Schwenken des Schwenkarms in die aufrechte Position die an dem Schwenkarm angebrachte Spanneinrichtung zum Sichern der Ladung entlang der Umfangsseite aufgespannt wird.

Der Erfindung liegt die Überlegung zu Grunde, das aus dem Haushaltsbereich bekannte Prinzip eines klappbaren Wand-Wäschetrockners auf ein völlig anderes technisches Gebiet zu einem völlig anderen Zweck, nämlich zur Sicherung einer Ladung auf einer beispielsweise auf einem Fahrzeug vorgesehenen Ladungsaufnahmeeinrichtung zu übertragen. Bei einem Wandwäschetrockner können die an der Wand montierten gegenläufigen Schwenkarme ausgeschwenkt werden, um an den Schwenkarmen angebrachte Spannbänder aufzuspannen bzw. aus den Schwenkarmen Hartplastikbänder herauszuziehen. Auf den gespannten Spannbändern bzw. herausgezogenen Hartplastikbändern kann die Wäsche zum Trocknen aufgehängt werden. Der Erfindungsgedanke besteht nun darin, eine Ladungssicherungseinrichtung vorzusehen, die mindestens einen Schwenkarm ähnlich dem eines Wand-Wäschetrockners aufweist. Durch Ausschwenken des Schwenkarms soll eine Spanneinrichtung aufgespannt werden, die die Ladung auf der Ladungsaufnahmeeinrichtung sichert.

Dabei ist der Schwenkarm an mindestens einer Umfangsseite der Ladungsaufnahmeeinrichtung zwischen einer entlang der Umfangsseite liegenden und einer aufrechten Position schwenkbar angeordnet. Hierzu kann der Schwenkarm an einem Ende in einer an der Umfangsseite der Ladungsaufnahmeeinrichtung angeordneten Drehachse drehbar gelagert sein. An der Längsseite des Schwenkarms, bevorzugt an der Innenseite des Schwenkarms, ist eine Spanneinrichtung angebracht.

Die Spanneinrichtung kann insbesondere Spannbänder oder Spannschnüre umfassen.

In einer denkbaren, einfachen Ausführungsform der Erfindung kann die einerseits am Schwenkarm angebrachte Spanneinrichtung andererseits an festen Aufhängungen an der Ladungsaufnahmeeinrichtung selbst oder an einem an der Ladungsaufnahmeeinrichtung angeordneten, feststehenden Arm angebracht sein. Beispielsweise kann die Spanneinrichtung mit einem Ende an der Umfangsseite der Ladungsaufnahmeeinrichtung und mit dem anderen Ende an dem Schwenkarm befestigt sein. Beim Schwenken des Schwenkarms in die aufrechte Position wird die Spanneinrichtung schräg in Form eines Dreiecks aufgespannt und grenzt einen Raum oberhalb der Umfangsseite der Ladungsaufnahmeeinrichtung teilweise nach außen ab. Mit einer gegensinnig aufgespannten Spanneinrichtung eines weiteren Schwenkarms kann eine überdeckende Bespannung der Umfangsseite der Ladungsaufnahmeeinrichtung erreicht werden.

Gemäß einer bevorzugten Ausgestaltung der Erfindung ist vorgesehen, dass jeweils mindestens ein Paar von Schwenkarmen einer Umfangsseite über gegensinnig und somit gegenläufig schwenkbare Schwenkarme verfügt und zwischen den beiden gegensinnig schwenkbaren Schwenkarmen die Spanneinrichtung angeordnet ist, die durch Schwenken der beiden Schwenkarme in die aufrechte Position zwischen den beiden Schwenkarmen aufspannbar ist. Auf diese Weise wird eine großflächige Bespannung der Umfangsseite der Ladungsaufnahmeeinrichtung bis zu einer einheitlichen Höhe, nämlich bis zur Höhe der aufgeklappten Schwenkarme, erreicht.

Je nach Beschaffenheit der Ladungsaufnahmeeinrichtung und der vorgesehenen Betriebsbedingungen kann auf eine umlaufende Bespannung der Ladungsaufnahmeeinrichtung verzichtet werden. Ist beispielsweise die Ladungsaufnahmeeinrichtung so beschaffen, dass sie nur an einer Umfangsseite seitlich zugänglich ist, kann es genügen, nur diese Umfangseite zu bespannen. In diesem Fall ist zweckmäßigerweise an den beiden Enden dieser Umfangsseite jeweils ein Schwenkarm befestigt. In der liegenden Position liegen sich die Schwenkarme entlang der Umfangsseite der Ladungsaufnahmeeinrichtung in einer gemeinsamen, gedachten Längsachse gegenüber. Durch gegenläufiges Schwenken der beiden Schwenkarme in die aufrechte Position wird die an den Schwenkarmen befestigte Spanneinrichtung aufgespannt und sichert so die Ladungsaufnahmeeinrichtung maximal bis zur Höhe der Schwenkarme zur Umfangsseite hin ab.

Sehen die Betriebsbedingungen lediglich eine lineare Bewegung der Ladungsaufnahmeeinrichtung, beispielsweise auf einem linear geführten Fahrzeug, vor, kann es genügen, nur in Bewegungsrichtung gegenüberliegende Umfangsseiten zu bespannen. Da in diesem Fall nur Längsbeschleunigungen, aber keine Querbeschleunigungen (wie bei Kurvenfahrten) auftreten, muss die Ladung lediglich in der linearen Bewegungsrichtung gesichert werden.

Um alle Beschaffenheiten und Betriebsbedingungen der Ladungsaufnahmeeinrichtung zu berücksichtigen, ist gemäß einer besonders bevorzugten Ausgestaltung der Erfindung vorgesehen, dass an jeder Umfangsseite der Ladungsaufnahmeeinrichtung mindestens ein Paar der gegensinnig schwenkbaren Schwenkarme angeordnet ist.

Vorteilhafterweise ist die Spanneinrichtung in der liegenden Position der Schwenkarme im Inneren der Schwenkarme angeordnet. Somit ist die Spanneinrichtung in der liegenden Position der Schwenkarme platzsparend aufgeräumt und geschützt angeordnet und steht einer Beladung oder Entladung der Ladungsaufnahmeeinrichtung nicht im Wege.

Dies gilt auch für die Schwenkarme selbst, die gemäß einer bevorzugten Ausgestaltung in der liegenden Position im Wesentlichen horizontal und in der aufrechten Position im Wesentlichen vertikal angeordnet sind.

Vorzugsweise ist die Ladungsaufnahmeeinrichtung als Plattform mit einer Ablagefläche ausgebildet, auf der die Ladung ablegbar ist. Dabei weist die Plattform mit Vorteil eine im Wesentlichen rechteckige Ablagefläche auf, wobei an jeder Rechteckseite jeweils ein Paar der gegensinnig schwenkbaren Schwenkarme angeordnet ist.

Gemäß einer Weiterbildung des Erfindungsgedankens ist der Schwenkarm verlängerbar, insbesondere ausziehbar, wobei an der Verlängerung ebenfalls eine Spanneinrichtung angebracht ist. Dadurch wird erreicht, dass die Ladungssicherungseinrichtung insgesamt eine größere Höhenausdehnung aufweist, um auch höhere Ladungen absichern zu können.

Vorzugsweise ist die Ladungssicherungseinrichtung in die Ladungsaufnahmeeinrichtung integriert. Hierzu kann der Schwenkarm an der Ladungsaufnahmeeinrichtung, beispielsweise am Rand der Plattform, angebracht sein. Auf diese Weise kann die Ladungssicherungseinrichtung zum Beispiel eine auf der Plattform abgelegte Palette und auf der Palette befindliche Ladung zur Seite hin absichern.

Eine andere vorteilhafte Variante besteht darin, dass die Ladungssicherungseinrichtung auf einem Montagerahmen montiert ist, der an der Ladungsaufnahmeeinrichtung montierbar ist. Dieser Montagerahmen kann beispielsweise in Form eines Auflegerahmens oder Zwischenrahmens oder eines mit den Schwenkarmen versehenen Gestells auf die Ladungsaufnahmeeinrichtung des Fahrzeugs gelegt werden oder an der Ladungsaufnahmeeinrichtung oder einem Fahrzeug derart befestigt werden, so dass der Rahmen bzw. das Gestell nach Aufnahme bzw. Ablagen einer Palette auf der Ladungsaufnahmeeinrichtung unterhalb der Palette oder auf gleicher Höhe wie die Palette positioniert ist und/oder die Außenkontur einer Palette umfasst.

Bevorzugt ist die Ladungsaufnahmeeinrichtung auf einem Fahrzeug zum Transport der Ladung angeordnet.

Das Fahrzeug kann als beliebiges Transportfahrzeug zum Transport einer Ladung ausgebildet sein.

Bevorzugt ist das Fahrzeug als Flurförderzeug, insbesondere als Plattformwagen, Schlepper, Routenzug-Fahrzeug, Anhänger oder Kommissionierfahrzeug ausgebildet.

Besonders vorteilhaft ist die Ausbildung des Fahrzeugs als autonomes Fahrzeug. Hierzu gehören fahrerlose Transportfahrzeuge (FTF, englisch: Automated Guided Vehicle, AGV). Darunter versteht man flurgebundene Förderfahrzeuge mit eigenem Fahrantrieb, die automatisch gesteuert und berührungslos geführt werden. Es gibt auch fahrerlose Transportfahrzeuge, die Ladungen selbständig aufnehmen können. Da diese Fahrzeuge unbemannt unterwegs sind, kann niemand die Ladung manuell sichern. Hier kommt der Vorteil der erfindungsgemäßen Ladungssicherung mittels der auf dem Fahrzeug angeordneten Spanneinrichtung ganz besonders zum Tragen.

In einer bevorzugten Ausgestaltung ist das Fahrzeug als mobiler Kommissionierroboter ausgebildet. Kommissionierroboter können Packstücke selbständig mittels Roboterarmen aufnehmen und auf einer mitgeführten Plattform ablegen. Da diese mobilen Kommissionierroboter ebenfalls unbemannt unterwegs sind, kann auch hier niemand die Ladung manuell sichern. Somit kommt der Vorteil der erfindungsgemäßen Ladungssicherung auch hier ganz besonders zum Tragen.

Gemäß einer Weiterbildung der Erfindung steht die Ladungssicherungseinrichtung mit einer Steuerungseinrichtung, besonders bevorzugt mit einer Steuerungseinrichtung des Fahrzeugs, in Wirkverbindung, die das Schwenken des Schwenkarms steuert.

Dabei ist die Steuerungseinrichtung bevorzugt dazu eingerichtet, nach erfolgter Aufnahme der Ladung auf der Ladungsaufnahmeeinrichtung den Schwenkvorgang des Schwenkarms in die aufrechte Position automatisch einzuleiten.

Hierzu kann die Steuerungseinrichtung mit mindestens einem im Bereich der Ladungsaufnahmeeinrichtung angeordneten Sensor in Wirkverbindung stehen, der die Beladung überwacht. Hierzu kann beispielsweise mindestens ein Infrarot-Sensor und/oder mindestens ein Laserscanner und/oder mindestens eine Kamera vorgesehen sein. Auf diese Weise kann insbesondere bei autonomen Fahrzeugen neben einer vollautomatischen Ladungsaufnahme auch eine vollautomatische Ladungssicherung ermöglicht werden.

Eine weitere Ausgestaltung der Erfindung sieht vor, dass der Sensor auch für eine Erfassung der räumlichen Anordnung der aufgenommenen Ladung ausgebildet ist und die Steuerungseinrichtung dazu eingerichtet ist, aus den Sensordaten die für eine optimale Ladungssicherung günstigste Höhe der Verlängerung des Schwenkarms in der aufrechten Position des Schwenkarms zu steuern.

Besonders bevorzugt ist die Steuerungseinrichtung als Steuerungseinrichtung des Fahrzeugs ausgebildet.

Die Erfindung bietet den Vorteil, dass die Ladungssicherungseinrichtung mit keinem Verbrauch an materiellen Betriebsmitteln verbunden ist, wie dies beispielsweise beim Umwickeln der Ladung mit einer Dehnfolie der Fall ist. Die erfindungsgemäße Ladungssicherungseinrichtung ist ein Mehrwegsystem. Ein wesentlicher Vorteil der Erfindung besteht außerdem darin, dass die Ladungssicherungseinrichtung automatisierbar ist, so dass sie auch bei autonomen Fahrzeugen, beispielsweise einem mobilen Kommissionierroboter, ohne zusätzlichen Personalbedarf einsetzbar ist.

Weitere Vorteile und Einzelheiten der Erfindung werden anhand des in den schematischen Figuren dargestellten Ausführungsbeispiels näher erläutert. Hierbei zeigen
- Figur 1: eine perspektivische Darstellung der Ladungsaufnahmeeinrichtung mit zugeklappter Ladungssicherungseinrichtung ohne Ladung,
- Figur 2: eine perspektivische Darstellung der Ladungsaufnahmeeinrichtung mit zugeklappter Ladungssicherungseinrichtung mit Ladung,
- Figur 3: eine Detailansicht der Ladungssicherungseinrichtung,
- Figur 4: eine perspektivische Darstellung der Ladungsaufnahmeeinrichtung mit aufgeklappter Ladungssicherungseinrichtung und
- Figur 5: eine perspektivische Darstellung der Ladungsaufnahmeeinrichtung mit aufgeklappter und ausgefahrener Ladungssicherungseinrichtung.

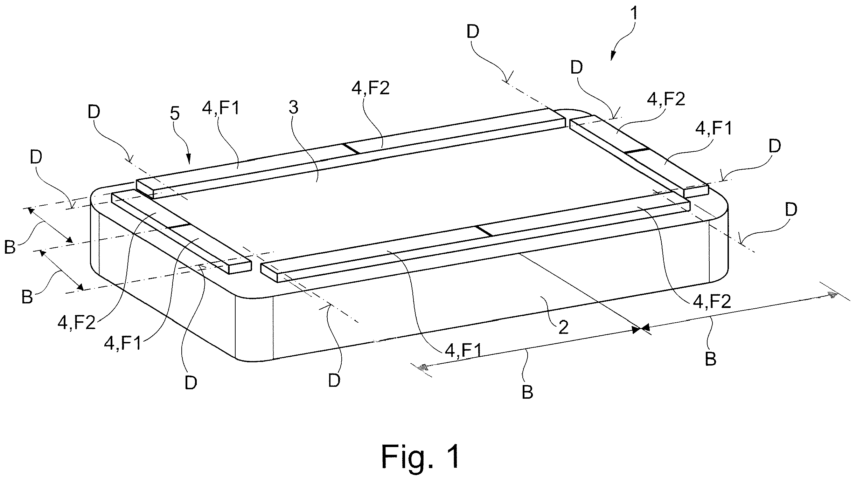

In der Figur 1 ist eine perspektivische Darstellung der Ladungsaufnahmeeinrichtung 2 gezeigt.

Im dargestellten Ausführungsbeispiel handelt es sich dabei um eine Ladungsaufnahmeeinrichtung 2 eines Fahrzeugs 1, das als autonomes Flurförderzeug, beispielsweise als mobiler Kommissionierroboter, mit einer beispielsweise als Plattform 3 ausgebildeten Ladungsaufnahmeeinrichtung 2 ausgeführt ist. Auf der Ladungsaufnahmeeinrichtung 2 kann eine nicht näher dargestellte Palette abgelegt sein, auf der Ladung abgelegt wird.

An der Ladungsaufnahmeeinrichtung 2 ist die Ladungssicherungseinrichtung 5 angeordnet. Die Ladungssicherungseinrichtung 5 verfügt über Schwenkarme 4, die an den Umfangsseiten der Ladungsaufnahmeeinrichtung 2 positioniert sind. Die Schwenkarme 4 sind jeweils zwischen einer entlang der Umfangsseite liegenden, also zugeklappten, und einer aufrechtstehenden, also aufgeklappten, Position um jeweils eine Drehachse D schwenkbar.

In der Figur 1 sind die Schwenkarme 4 in der zugeklappten Position dargestellt.

Im dargestellten Ausführungsbeispiel ist an jeder der vier Umfangsseiten der Ladungsaufnahmeeinrichtung 2 jeweils ein Paar von Schwenkarmen 4 angeordnet, das über gegensinnig und somit gegenläufig schwenkbare Schwenkarme 4 verfügt. Die beiden Schwenkarme 4 eines Schwenkarmpaares an einer Umfangsseite der Ladungsaufnahmeeinrichtung 2 wird im Folgenden als Flügel F1, F2 bezeichnet. Die Drehachsen D der beiden Schwenkarme 4 (Flügel F1, F2) eines Schwenkarmpaares an der entsprechenden Umfangsseite der Ladungsaufnahmeeinrichtung 2 sind an den Endbereichen der entsprechenden Umfangsseite der Ladungsaufnahmeeinrichtung 2 angeordnet, so dass die beiden Schwenkarme 4 (Flügel F1, F2) eines Schwenkarmpaares an der entsprechenden Umfangsseite der Ladungsaufnahmeeinrichtung 2 ähnlich einer Eisenbahnschranke aufklappen. Zwischen den beiden gegensinnig schwenkbaren Schwenkarmen 4 eines Schwenkarmpaares an der entsprechenden Umfangsseite der Lastaufnahmeeinrichtung 2 ist jeweils eine Spanneinrichtung 7 angeordnet ist, die durch Schwenken der beiden Schwenkarme 4 (Flügel F1, F2) des Schwenkarmpaares um die entsprechende Drehachsen D in die aufrechte Position zwischen den beiden Schwenkarmen 4 aufspannbar ist. Die Flügel F1, F2 eines Schwenkarmpaares an einer Umfangsseite weisen bevorzugt dieselbe Breite B auf. Die Breite B jedes Flügels F1, F2 eines Schwenkarmpaares entspricht im Wesentlichen der halben Länge der entsprechenden Umfangsseite der Lastaufnahmeeinrichtung.

Die an den vier Umfangsseiten der Ladungsaufnahmeeinrichtung 2 angeordneten Schwenkarmpaare 4 sind derart angeordnet, dass innerhalb der eingeklappten Schwenkarme 4 eine Palette auf die Plattform 3 abgelegt werden kann. Die Schwenkarme 4 sind hierzu an dem äußeren Rand der Plattform 3 angeordnet.

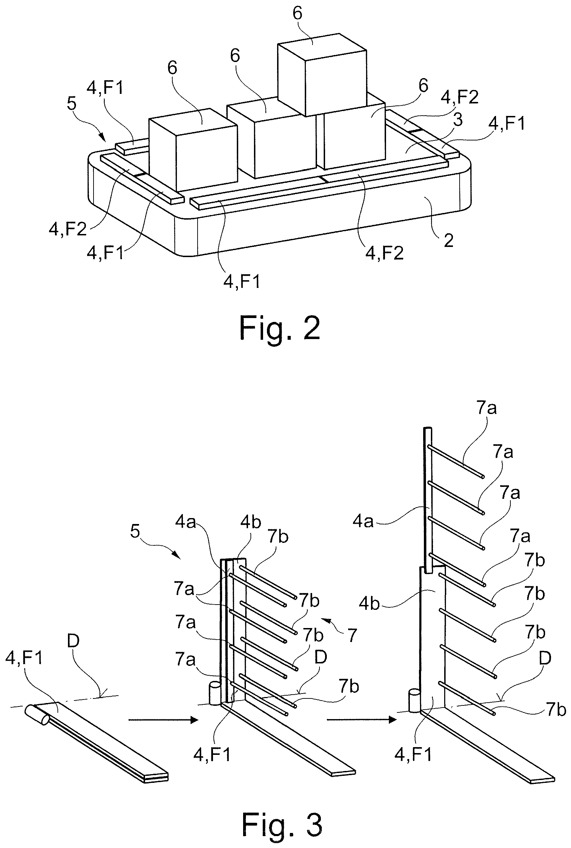

Die Figur 2 zeigt die Ladungsaufnahmeeinrichtung 2 aus der Figur 1 mit aufgenommener Ladung 6. Die Ladung 6 ist auf der Plattform 3 der Ladungsaufnahmeeinrichtung 2 oder einer auf der Ladungsaufnahmeeinrichtung 2 befindlichen Palette abgelegt. Zum Ablegen der Ladung 6 auf der Plattform 3 sind die Schwenkarme 4 der Ladungssicherungseinrichtung 5 zugeklappt, so dass die Plattform 3 von allen Seiten frei zugänglich ist. Die freie Zugänglichkeit ist insbesondere bei autonomen Flurförderzeugen, beispielsweise mobilen Kommissionierrobotern, vorteilhaft, da diese in der Regel nur seitlich stapeln können und die Ladung nicht von oben beispielsweise in einen Korb ablegen können. In dieser zugeklappten Position der Schwenkarme 4 kann die Ladung 6 bzw. eine mit der Ladung 6 beladene Palette auch wieder auf einfache Weise seitlich von der Ladungsaufnahmeeinrichtung 2 entnommen und abgeladen werden.

In der Figur 3 ist die Ladungssicherungseinrichtung 5 im Detail dargestellt.

In der linken Abbildung der Figur 3 ist der Schwenkarm 4 im zugeklappten Zustand dargestellt. Im eingeklappten Zustand sind die Spannbänder 7a, 7b im Inneren des Schwenkarms 4 untergebracht. Zum Sichern der auf der Ladungsaufnahmeeinrichtung 2 oder einer auf der Ladungsaufnahmeeinrichtung 2 befindlichen Palette abgelegten Ladung 6 kann der Schwenkarm 4 um die horizontale Drehachse D in einem ersten Schritt in die aufrechte Position geschwenkt, also aufgeklappt werden.

Die mittlere Abbildung der Figur 3 zeigt den Schwenkarm 4 im aufgeklappten Zustand. Das Aufklappen kann manuell oder mit Hilfe eines elektrischen Aktuators, beispielsweise eines Schrittmotors, erfolgen. Beim Aufklappen werden die zwei, als Flügel F1, F2 gegenüber liegenden Schwenkarme 4 eines Schwenkarmpaares, von denen in der Figur 3 nur der Flügel F1 gezeigt ist, gegensinnig und somit gegenläufig um die entsprechenden Drehachsen D in die aufrechte Position aufgeklappt. Die Höhe der aufgeklappten Schwenkarme 4 beschränkt sich dabei auf die Breite B eines Flügels F1 bzw. F2, also die Länge des Schwenkarms 4 bzw. der halben Länge der entsprechenden Umfangsseite der Ladungsaufnahmeeinrichtung 2.

Um höhere Ladungen sichern zu können, ist gemäß einer Weiterbildung der Erfindung in einem zweiten Schritt weiterhin vorgesehen, die Ladungssicherungseinrichtung 5 durch Verlängerung der Schwenkarme 4 im aufgeklappten Zustand hochzufahren. Hierzu besteht der aufzuklappende Flügel F1 bzw. F2 des Schwenkarms 4 aus jeweils zwei Flügelteilen 4a und 4b, wobei der Flügelteil 4a in der ausgeklappten Position an dem Flügelteil 4b nach oben ausgefahren werden kann, um die Höhe der Ladungssicherungseinrichtung 5 im ausgeklappten Zustand der Schwenkarme 4 zu vergrößern. Das Ausfahren des Flügelteils 4a kann manuell oder mit Hilfe eines elektrischen Aktuators, beispielsweise eines elektrischen Motors, insbesondere mittels eines Linearaktuators, erfolgen.

Beim Aufklappen der beiden Flügel F1, F2 eines Schwenkarmpaares werden zwischen den beiden Schwenkarmen 4 des Schwenkarmpaares im dargestellten Ausführungsbeispiel zwei Reihen Spannbänder 7a, 7b einer Spanneinrichtung 7 aufgespannt. Die Spannbänder 7a, 7b sind hierzu bevorzugt an den Innenseiten der beiden Flügel F1, F2 angeordnet und befestigt. Es handelt sich dabei um zwei Reihen Spannbänder 7a, 7b. Die Reihe Spannbänder 7b ist an den aufklappbaren Flügelteilen 4b angeordnet und die Reihe Spannbänder 7a an den nach oben ausfahrbaren Flügelteilen 4a angeordnet. Die Reihe Spannbänder 7a kann somit mit dem Flügelteil 4a hochgefahren werden. Dadurch kann die oben genannte Einschränkung, wonach die Höhe der aufgeklappten Schwenkarme 4 auf die Breite B eines Flügels F1 bzw. F2 beschränkt ist, umgangen werden.

In der rechten Abbildung der Figur 3 ist der Schwenkarm 4 im aufgeklappten Zustand des Flügelteils 4b und mit nach oben ausgefahrenem Flügelteil 4a sowie aufgespannten Spannbändern 7a und 7b gezeigt.

Im eingeklappten Zustand sind die Spannbänder 7a, 7b im Inneren der beiden Flügel F1, F2 bzw. der beiden Schwenkarme 4 eines Schwenkarmpaares untergebracht. Sind die beiden Schwenkarme 4 eines Schwenkarmpaares in eine 90°- Position um die jeweilige Drehachse D aufgeklappt, sind die Spannbänder 7a, 7b vollständig gespannt. Durch das Ausklappen der beiden Flügel F1, F2 eines Schwenkarmpaares werden hierbei die im Inneren der Schwenkarme 4 angeordneten Spannbänder 7a, 7b aufgespannt.

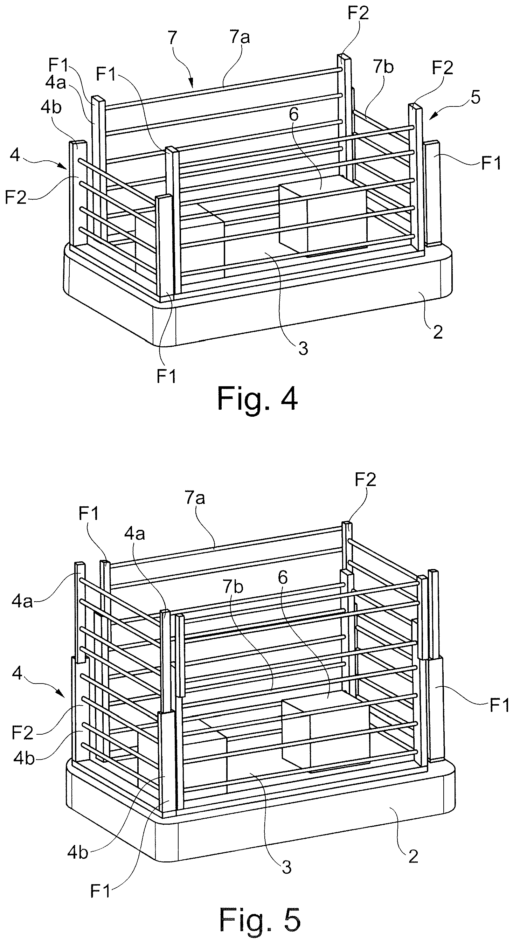

Die Figur 4 zeigt eine perspektivische Darstellung der Ladungsaufnahmeeinrichtung 2 mit aufgeklappter Ladungssicherungseinrichtung 5. Die Schwenkarme 4 mit den Flügelteilen 4a und 4b sind in eine vertikale Position aufgeklappt, so dass die Spannbänder 7a, 7b der Spanneinrichtung 7 gespannt sind. Die Flügelteile 4a sind noch nicht nach oben ausgefahren. Die Spannbänder 7a, 7b umgeben die Ladung 6 und sichern diese auf der Ladungsaufnahmeeinrichtung 2.

In der Figur 5 ist die Ladungsaufnahmeeinrichtung 2 der Figur 4 mit ausgefahrener Ladungssicherungseinrichtung 5, d.h. hochgefahrenen Flügelteilen 4a, dargestellt. Um höhere Ladungen 6 zu sichern, sind die Flügelteile 4a der Schwenkarme 4 mit den daran angeordneten Spannbänder 7a nach oben ausgefahren.

Bei einem als mobiler Kommissionierroboter ausgebildeten Fahrzeug 1 wird für einen Kommissionierauftrags eine Ladung 6 in Form von mehreren Packstücken auf der Ladungsaufnahmeeinrichtung 2 oder einer auf der Ladungsaufnahmeeinrichtung 2 befindlichen Palette abgelegt (Figur 2). Die Schwenkarme 4 können hierbei ausgeklappt (Figur 4) und gegebenenfalls nach oben ausgefahren werden (Figur 5), wenn eine Ladungssicherung erforderlich ist. Am Ende des Kommissioniervorgangs werden die Schwenkarme 4 wieder eingefahren und eingeklappt (Figur 2), so dass die Ladung bzw. die Palette mit der darauf befindlichen Ladung von dem Fahrzeug abgeladen werden kann.

## Patentansprüche

1. Ladungsaufnahmeeinrichtung (2) für ein Fahrzeug zur Aufnahme einer Ladung, wobei die Ladungsaufnahmeeinrichtung (2) über eine Ladungssicherungseinrichtung (5) zur Sicherung der Ladung (6) im Bereich der Ladungsaufnahmeeinrichtung (2) verfügt, wobei die Ladungssicherungseinrichtung (5) an mindestens einer Umfangsseite der Ladungsaufnahmeeinrichtung (2) mindestens einen, zwischen einer entlang der Umfangsseite liegenden und einer aufrechten Position schwenkbaren, Schwenkarm (4) aufweist, **dadurch gekennzeichnet, dass** an dem Schwenkarm (4) eine Spanneinrichtung (7) derart angebracht ist, dass durch Schwenken des Schwenkarms (4) in die aufrechte Position die an dem Schwenkarm (4) angebrachte Spanneinrichtung (7) zum Sichern der Ladung (6) entlang der Umfangsseite aufgespannt wird.

2. Ladungsaufnahmeeinrichtung (2) nach Anspruch 1, **dadurch gekennzeichnet, dass** die Spanneinrichtung (7) Spannbänder (7a, 7b) oder Spannschnüre umfasst.

3. Ladungsaufnahmeeinrichtung (2) nach Anspruch 1 oder 2, **dadurch gekennzeichnet, dass** jeweils mindestens ein Paar von Schwenkarmen (4) einer Umfangsseite der Ladungsaufnahmeeinrichtung (2) über gegensinnig schwenkbare Schwenkarme (4) verfügt und zwischen den beiden gegensinnig schwenkbaren Schwenkarmen (4) die Spanneinrichtung (7) angeordnet ist, die durch Schwenken der Schwenkarme (4) in die aufrechte Position zwischen den beiden Schwenkarmen (4) aufspannbar ist.

4. Ladungsaufnahmeeinrichtung (2) nach einem der Ansprüche 1 bis 3, **dadurch gekennzeichnet, dass** die Spanneinrichtung (7) in der liegenden Position des Schwenkarms (4) im Inneren des Schwenkarms (4) angeordnet ist.

5. Ladungsaufnahmeeinrichtung (2) nach einem der Ansprüche 1 bis 4, **dadurch gekennzeichnet, dass** an jeder Umfangsseite der Ladungsaufnahmeeinrichtung (2) mindestens ein Paar der gegensinnig schwenkbaren Schwenkarme (4) angeordnet ist.

6. Ladungsaufnahmeeinrichtung (2) nach einem der Ansprüche 1 bis 5, **dadurch gekennzeichnet, dass** der Schwenkarm (4) in der liegenden Position im Wesentlichen horizontal und in der aufrechten Position im Wesentlichen vertikal angeordnet ist.

7. Ladungsaufnahmeeinrichtung (2) nach einem der Ansprüche 1 bis 6, **dadurch gekennzeichnet, dass** die Ladungsaufnahmeeinrichtung (2) als Plattform (3) mit einer Ablagefläche ausgebildet ist, auf der die Ladung (6) ablegbar ist.

8. Ladungsaufnahmeeinrichtung (2) nach Anspruch 7, **dadurch gekennzeichnet, dass** die Plattform (3) eine im Wesentlichen rechteckige Ablagefläche aufweist und an jeder Rechteckseite jeweils ein Paar der gegensinnig schwenkbaren Schwenkarme (4) angeordnet ist.

9. Ladungsaufnahmeeinrichtung (2) nach einem der Ansprüche 1 bis 8, **dadurch gekennzeichnet, dass** der Schwenkarm (4) verlängerbar, insbesondere ausziehbar, ist, wobei an der Verlängerung ebenfalls eine Spanneinrichtung (7) angebracht ist.

10. Ladungsaufnahmeeinrichtung (2) nach einem der Ansprüche 1 bis 9, **dadurch gekennzeichnet, dass** die Ladungssicherungseinrichtung (5) in die Ladungsaufnahmeeinrichtung (2) integriert ist.

11. Ladungsaufnahmeeinrichtung (2) nach einem der Ansprüche 1 bis 9, **dadurch gekennzeichnet, dass** die Ladungssicherungseinrichtung (5) auf einem Montagerahmen montiert ist, der an der Ladungsaufnahmeeinrichtung montierbar ist.

12. Ladungsaufnahmeeinrichtung (2) nach einem der Ansprüche 1 bis 11, **dadurch gekennzeichnet, dass** die Ladungsaufnahmeeinrichtung (2) auf einem Fahrzeug (1) zum Transport der Ladung (3) angeordnet ist.

13. Ladungsaufnahmeeinrichtung (2) nach Anspruch 12, **dadurch gekennzeichnet, dass** das Fahrzeug (1) als Flurförderzeug, insbesondere als Plattformwagen, Schlepper, Routenzug-Fahrzeug, Anhänger oder Kommissionierfahrzeug ausgebildet ist.

14. Ladungsaufnahmeeinrichtung (2) nach Anspruche 12 oder 13, **dadurch gekennzeichnet, dass** das Fahrzeug (1) als autonomes Fahrzeug (1) ausgebildet ist.

15. Ladungsaufnahmeeinrichtung (2) nach Anspruch 14, **dadurch gekennzeichnet, dass** das Fahrzeug (1) als mobiler Kommissionierroboter ausgebildet ist.

16. Ladungsaufnahmeeinrichtung (2) nach einem der Ansprüche 1 bis 15, **dadurch gekennzeichnet, dass** die Ladungssicherungseinrichtung (5) mit einer Steuerungseinrichtung in Wirkverbindung steht, die das Schwenken des Schwenkarms (4) steuert.

17. Ladungsaufnahmeeinrichtung (2) nach Anspruch 16, **dadurch gekennzeichnet, dass** die Steuerungseinrichtung dazu eingerichtet ist, nach erfolgter Aufnahme der Ladung (6) auf der Ladungsaufnahmeeinrichtung (2) den Schwenkvorgang des Schwenkarms (4) in die aufrechte Position automatisch einzuleiten.

18. Ladungsaufnahmeeinrichtung (2) nach Anspruch 16 oder 17, **dadurch gekennzeichnet, dass** die Steuerungseinrichtung mit mindestens einem im Bereich der Ladungsaufnahmeeinrichtung (2) angeordneten Sensor in Wirkverbindung steht, der die Beladung überwacht.

19. Ladungsaufnahmeeinrichtung (2) nach Anspruch 18, **dadurch gekennzeichnet, dass** als Sensor ein Infrarot-Sensor und/oder ein Laserscanner und/oder eine Kamera vorgesehen ist.

20. Ladungsaufnahmeeinrichtung (2) nach Anspruch 18 oder 19, **dadurch gekennzeichnet, dass** der Sensor für eine Erfassung der räumlichen Anordnung der aufgenommenen Ladung ausgebildet ist und die Steuerungseinrichtung dazu eingerichtet ist, aus den Sensordaten die für eine optimale Ladungssicherung günstigste Höhe der Verlängerung des Schwenkarms (4) in der aufrechten Position des Schwenkarms zu steuern.

21. Ladungsaufnahmeeinrichtung (2) nach einem der Ansprüche 16 bis 20, **dadurch gekennzeichnet, dass** die Steuerungseinrichtung als Steuerungseinrichtung des Fahrzeugs (1) ausgebildet ist.

## Claims

1. Load receiving device (2) for a vehicle for receiving a load, wherein the load receiving device (2) has a load securing device (5) for securing the load (6) in the region of the load receiving device (2), wherein the load securing device (5) has on at least one peripheral side of the load receiving device (2) at least one swivel arm (4), which can be swivelled between a position lying along the peripheral side and an upright position, **characterized in that** a tensioning device (7) is attached to the swivel arm (4) in such a way that, by swivelling of the swivel arm (4) into the upright position, the tensioning device (7) attached to the swivel arm (4) is stretched along the peripheral side to secure the load (6).

2. Load receiving device (2) according to Claim 1, **characterized in that** the tensioning device (7) comprises tension straps (7a, 7b) or tension cords.

3. Load receiving device (2) according to Claim 1 or 2, **characterized in that** in each case at least one pair of swivel arms (4) of a peripheral side of the load receiving device (2) has oppositely swivellable swivel arms (4) and arranged between the two oppositely swivellable swivel arms (4) is the tensioning device (7), which can be stretched between the two swivel arms (4) by swivelling of the swivel arms (4) into the upright position.

4. Load receiving device (2) according to one of Claims 1 to 3, **characterized in that**, in the lying position of the swivel arm (4), the tensioning device (7) is arranged inside the swivel arm (4).

5. Load receiving device (2) according to one of Claims 1 to 4, **characterized in that** at least one pair of the oppositely swivellable swivel arms (4) is arranged on each peripheral side of the load receiving device (2).

6. Load receiving device (2) according to one of Claims 1 to 5, **characterized in that** the swivel arm (4) is arranged substantially horizontally in the lying position and substantially vertically in the upright position.

7. Load receiving device (2) according to one of Claims 1 to 6, **characterized in that** the load receiving device (2) is configured as a platform (3) with a depositing area, on which the load (6) can be deposited.

8. Load receiving device (2) according to Claim 7, **characterized in that** the platform (3) has a substantially rectangular depositing area and a pair of the oppositely swivellable swivel arms (4) is arranged on each side of the rectangle.

9. Load receiving device (2) according to one of Claims 1 to 8, **characterized in that** the swivel arm (4) is extendable, in particular can be pulled out, wherein a tensioning device (7) is likewise attached to the extension.

10. Load receiving device (2) according to one of Claims 1 to 9, **characterized in that** the load securing device (5) is integrated in the load receiving device (2).

11. Load receiving device (2) according to one of Claims 1 to 9, **characterized in that** the load securing device (5) is mounted on a mounting frame which can be mounted on the load receiving device.

12. Load receiving device (2) according to one of Claims 1 to 11, **characterized in that** the load receiving device (2) is arranged on a vehicle (1) for transporting the load (3).

13. Load receiving device (2) according to Claim 12, **characterized in that** the vehicle (1) is configured as an industrial truck, in particular as a platform truck, tractor, tugger train vehicle, trailer or order-picking vehicle.

14. Load receiving device (2) according to Claim 12 or 13, **characterized in that** the vehicle (1) is configured as an autonomous vehicle (1).

15. Load receiving device (2) according to Claim 14, **characterized in that** the vehicle (1) is configured as a mobile order-picking robot.

16. Load receiving device (2) according to one of Claims 1 to 15, **characterized in that** the load securing device (5) is in operative connection with a control device which controls the swivelling of the swivel arm (4).

17. Load receiving device (2) according to Claim 16, **characterized in that** the control device is designed to initiate the swivelling operation of the swivel arm (4) into the upright position automatically after reception of the load (6) on the load receiving device (2) has taken place.

18. Load receiving device (2) according to Claim 16 or 17, **characterized in that** the control device is in operative connection with at least one sensor which is arranged in the region of the load receiving device (2) and monitors the loading.

19. Load receiving device (2) according to Claim 18, **characterized in that** an infrared sensor and/or a laser scanner and/or a camera is provided as the sensor.

20. Load receiving device (2) according to Claim 18 or 19, **characterized in that** the sensor is designed for sensing the spatial arrangement of the load received and the control device is designed to control from the sensor data the height of the extension of the swivel arm (4) in the upright position of the swivel arm that is most favourable for optimal securing of the load.

21. Load receiving device (2) according to one of Claims 16 to 20, **characterized in that** the control device is configured as a control device of the vehicle (1).

## Revendications

1. Dispositif de réception de chargement (2) pour un véhicule destiné à recevoir un chargement, le dispositif de réception de chargement (2) disposant d'un dispositif de sécurisation de chargement (5) destiné à sécuriser le chargement (6) dans la zone du dispositif de réception de chargement (2), le dispositif de sécurisation de chargement (5) possédant, au niveau d'au moins un côté périphérique du dispositif de réception de chargement (2), au moins un bras pivotant (4) qui peut pivoter entre une position allongée le long du côté périphérique et une position redressée, **caractérisé en ce qu'**un dispositif de tension (7) est monté sur le bras pivotant (4) de telle sorte que le dispositif de tension (7) monté sur le bras pivotant (4) est tendu en vue de sécuriser le chargement (6) le long du côté périphérique par un pivotement du bras pivotant (4) dans la position redressée.

2. Dispositif de réception de chargement (2) selon la revendication 1, **caractérisé en ce que** le dispositif de tension (7) comporte des bandes de tension (7a, 7b) ou des cordons de tension.

3. Dispositif de réception de chargement (2) selon la revendication 1 ou 2, **caractérisé en ce qu'**au moins une paire de bras pivotants (4) d'un côté périphérique du dispositif de réception de chargement (2) dispose respectivement de bras pivotants (4) qui peuvent pivoter en sens inverse et le dispositif de tension (7) est disposé entre les deux bras pivotants (4) qui peuvent pivoter en sens inverse, lequel peut être bloqué entre les deux bras pivotants (4) en pivotant les bras pivotants (4) en position redressée.

4. Dispositif de réception de chargement (2) selon l'une des revendications 1 à 3, **caractérisé en ce que** le dispositif de tension (7), dans la position allongée du bras pivotant (4), est disposé à l'intérieur du bras pivotant (4).

5. Dispositif de réception de chargement (2) selon l'une des revendications 1 à 4, **caractérisé en ce qu'**au moins une paire des bras pivotants (4) qui peuvent pivoter en sens inverse est disposée au niveau de chaque côté périphérique du dispositif de réception de chargement (2).

6. Dispositif de réception de chargement (2) selon l'une des revendications 1 à 5, **caractérisé en ce que** le bras pivotant (4), dans la position allongée, est disposé sensiblement horizontalement et, dans la position redressée, sensiblement verticalement.

7. Dispositif de réception de chargement (2) selon l'une des revendications 1 à 6, **caractérisé en ce que** le dispositif de réception de chargement (2) est réalisé sous la forme d'une plateforme (3) pourvue d'une surface de dépose sur laquelle peut être déposé le chargement (6) .

8. Dispositif de réception de chargement (2) selon la revendication 7, **caractérisé en ce que** la plateforme (3) possède une surface de dépose sensiblement rectangulaire et une paire des bras pivotants (4) qui peuvent pivoter en sens inverse est respectivement disposée de chaque côté du rectangle.

9. Dispositif de réception de chargement (2) selon l'une des revendications 1 à 8, **caractérisé en ce que** le bras pivotant (4) et prolongeable, notamment extensible, un dispositif de tension (7) étant également monté au niveau de la prolongation.

10. Dispositif de réception de chargement (2) selon l'une des revendications 1 à 9, **caractérisé en ce que** le dispositif de sécurisation de chargement (5) est intégré dans le dispositif de réception de chargement (2).

11. Dispositif de réception de chargement (2) selon l'une des revendications 1 à 9, **caractérisé en ce que** le dispositif de sécurisation de chargement (5) est monté sur un cadre de montage qui peut être monté au niveau du dispositif de réception de chargement.

12. Dispositif de réception de chargement (2) selon l'une des revendications 1 à 11, **caractérisé en ce que** dispositif de réception de chargement (2) est disposé sur un véhicule (1) pour le transport du chargement (3).

13. Dispositif de réception de chargement (2) selon la revendication 12, **caractérisé en ce que** le véhicule (1) est réalisé sous la forme d'un chariot de manutention, notamment sous la forme d'un chariot à plateforme, d'un tracteur, d'un véhicule de train routier, d'une remorque ou d'un véhicule de préparation de commandes.

14. Dispositif de réception de chargement (2) selon la revendication 12 ou 13, **caractérisé en ce que** le véhicule (1) est réalisé sous la forme d'un véhicule (1) autonome.

15. Dispositif de réception de chargement (2) selon la revendication 14, **caractérisé en ce que** le véhicule (1) est réalisé sous la forme d'un robot de préparation de commandes.

16. Dispositif de réception de chargement (2) selon l'une des revendications 1 à 15, **caractérisé en ce que** le dispositif de sécurisation de chargement (5) se trouve en liaison active avec un dispositif de commande qui commande le pivotement du bras pivotant (4).

17. Dispositif de réception de chargement (2) selon la revendication 16, **caractérisé en ce que** le dispositif de commande est conçu pour, après avoir réussi la réception du chargement (6) sur le dispositif de réception de chargement (2), initier automatiquement l'opération de pivotement du bras pivotant (4) dans la position redressée.

18. Dispositif de réception de chargement (2) selon la revendication 16 ou 17, **caractérisé en ce que** le dispositif de commande se trouve en liaison active avec au moins un capteur disposé dans la zone du dispositif de réception de chargement (2), lequel surveille l'opération de chargement.

19. Dispositif de réception de chargement (2) selon la revendication 18, **caractérisé en ce que** le capteur présent est un capteur à infrarouge et/ou un dispositif de balayage à laser et/ou une caméra.

20. Dispositif de réception de chargement (2) selon la revendication 18 ou 19, **caractérisé en ce que** le capteur est configuré pour une acquisition de l'arrangement dans l'espace du chargement réceptionné et le dispositif de commande est conçu pour, à partir des données de capteur, commander la hauteur la plus favorable pour une sécurisation optimale du chargement de la prolongation du bras pivotant (4) dans la position redressée du bras pivotant.

21. Dispositif de réception de chargement (2) selon l'une des revendications 16 à 20, **caractérisé en ce que** le dispositif de commande est réalisé sous la forme d'un dispositif de commande du véhicule (1).
